(19) Europäisches Patentamt / European Patent Office / Office européen des brevets

(11) **EP 4 101 047 B1**

(12) **FASCICULE DE BREVET EUROPEEN**

(45) Date de publication et mention de la délivrance du brevet:
**28.02.2024 Bulletin 2024/09**

(21) Numéro de dépôt: **21704857.8**

(22) Date de dépôt: **11.01.2021**

(51) Classification Internationale des Brevets (IPC):
**H02J 7/00** *(2006.01)*

(52) Classification Coopérative des Brevets (CPC):
**H02J 7/00711;** Y02E 60/10

(86) Numéro de dépôt international:
**PCT/FR2021/050036**

(87) Numéro de publication internationale:
**WO 2021/156553 (12.08.2021 Gazette 2021/32)**

(54) **PROCEDE DE CHARGE IMPULSIONNEL EN REGULATION DE TENSION A PALIER D'AMPLITUDE VARIABLE**

VERFAHREN ZUR IMPULSLADUNG MIT VARIABLEM AMPLITUDENSCHRITT

METHOD OF PULSE CHARGING WITH VARIABLE AMPLITUDE STEP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2020 FR 2001164**

(43) Date de publication de la demande:
**14.12.2022 Bulletin 2022/50**

(73) Titulaires:
- **Stellantis Auto SAS**
  **78300 Poissy (FR)**
- **Institut Polytechnique de Grenoble**
  **38031 Grenoble Cedex 1 (FR)**
- **SAFT**
  **92300 Lavallois-Perret (FR)**

(72) Inventeurs:
- **THORNER, Gentien**
  **75006 PARIS 06 (FR)**
- **ROY, Francis**
  **91940 LES ULIS (FR)**
- **DOUET, Jean Bernard**
  **78550 BAZAINVILLE (FR)**
- **PEUCHANT, Thomas**
  **33110 LE BOUSCAT (FR)**
- **HERPE, David**
  **33370 TRESSES (FR)**
- **THIVEL, Pierre Xavier**
  **38000 GRENOBLE (FR)**
- **LEPRÊTRE, Jean Claude**
  **38340 VOREPPE (FR)**

(56) Documents cités:
EP-A1- 2 146 415      US-A1- 2014 266 068
US-A1- 2016 322 841

**Description**

Le domaine de l'invention concerne un procédé de charge rapide d'une cellule électrochimique de batterie rechargeable et en particulier un procédé à commande d'impulsions de tension.

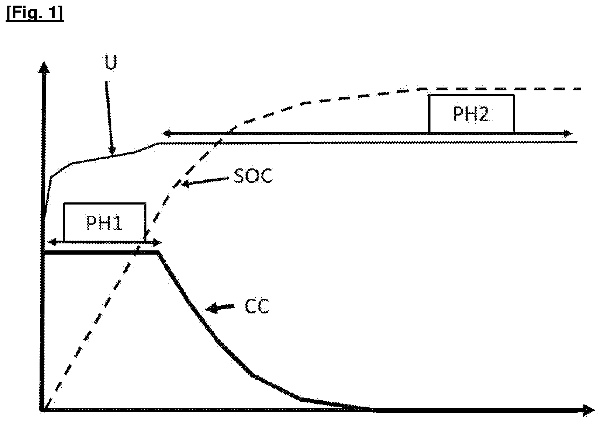

Classiquement, les protocoles de charges s'exécutent en deux phases successives désignées par l'acronyme anglais CC-CV pour « Constant Current » et « Constant Voltage ». En figure 1, on a représenté un exemple de protocole de charge CC-CV conventionnel où l'état de charge SOC est représenté par la courbe en pointillé. La première phase, référencée PH1, consiste à piloter un courant de charge constant (représenté par la courbe CC) jusqu'à ce que la tension de la cellule (représentée par la courbe U) atteigne une tension maximale préconisée par le fabricant, généralement 4,2V pour des cellules Li-ion à électrode positive de type NMC (Nickel Manganèse et Cobalt) ou NCA (Nickel Cobalt Aluminium). Puis, ces protocoles prévoient une deuxième phase PH2 à tension constante égale à la tension maximale. La tension maximale a pour fonction d'éviter le phénomène chimique indésirable de dépôt de Lithium, couramment désigné par le terme anglais « Lithium Plating ». Ce type de protocole de charge nécessite de trouver un compromis entre la vitesse de charge et l'élévation de la température pour limiter le vieillissement de la cellule. En effet, la première étape de charge classique PH1 en protocole CC-CV s'opère à courant constant ce qui contribue à augmenter la température de la cellule. Le palier potentiostatique de la deuxième phase PH2 augmente significativement le temps de recharge global.

Par ailleurs, le courant maximal de charge en régime CC-CV indiqué par le fabricant de cellule est également déterminé de façon à ne pas générer de réactions parasites pouvant conduire à la dégradation de l'électrolyte et le dépôt de lithium sur l'électrode négative pouvant conduire à la formation de dendrites et donc à l'observation de court-circuit. Au-delà des aspects sécuritaires, ce phénomène engendre une baisse de la capacité de l'élément, une dégradation des éléments de la batterie, notamment l'électrolyte, ainsi qu'une augmentation de sa résistance interne. Ce phénomène accélère donc le vieillissement de la cellule et par conséquent ses performances diminuent.

Du fait de ces contraintes, il est donc difficile d'augmenter la vitesse de charge d'une cellule en protocole CC-CV et conduit en général à des échauffements importants des cellules. Par exemple, pour des dispositifs classiquement utilisés pour une traction électrique de véhicule automobile, en mettant en oeuvre ce protocole, il est difficile d'atteindre des vitesses de charge supérieures à 2 C-Rate (Valeur de courant de charge pour une charge complète en une demi-heure).

Pour remédier à cet inconvénient, il est possible d'opter soit pour des grammages d'électrodes qui acceptent des courants de cyclage plus forts, au détriment de la capacité de l'élément, soit d'utiliser d'autres chimies, mais offrant là aussi moins de densité énergétique.

En outre, pour éviter les phénomènes de « Lithium Plating » il est connu de recourir à des protocoles alternatifs de charge à commande impulsionnelle. Une commande impulsionnelle alterne une impulsion de charge et une phase de relaxation à courant nul, ou une phase d'inversion de polarité. Ces deux dernières phases ne laissent pas le temps suffisant au Lithium pour se déposer sous forme métallique au niveau de l'électrode. Ce protocole permet donc d'augmenter la durée de vie de la cellule quand bien même la limite en tension maximale à 4.2V est dépassée, pouvant atteindre jusqu'à 4.85V. On connait de l'état de la technique les documents suivants décrivant des protocoles à commande impulsionnelle.

Le document US6707272B1 décrit un protocole où les impulsions sont limitées par une tension qui dépend de l'état de charge courant de la cellule. Lorsque la tension atteint la limite de tension, le protocole pilote une phase de relaxation.

Le document EP1396061 A2 décrit un protocole pilotant des impulsions en régulation de courant. Le protocole alterne des impulsions, hachées à la fréquence de résonance de la batterie, de l'ordre de 100 à 10000 Hz, et ayant une durée comprise entre 200 et 1500 millisecondes, et des phases de relaxation et de décharge respectivement de 1500 millisecondes maximum et 50 millisecondes maximum.

On connait également le document US20150028819A1 décrivant en figure 4 de ce même document un protocole de charge en quatre temps. Une pré charge à courant constant (CC mode), une charge principale à courant constant (CC mode), une charge impulsionnelle en régulation de courant à la valeur Isup constante (puise mode) et une phase à tension constante (CV mode).

Le document US20170005497A1 décrit un protocole de charge impulsionnelle par pilotage d'impulsions de tension d'amplitude constante suivies d'une phase de relaxation permettant de limiter l'effet de vieillissement. Selon ce protocole, la durée et l'amplitude des phases de charge, de décharge et de relaxation sont pilotées de manière aléatoire et permet d'augmenter le courant de charge sans endommager la cellule.

Le document WO2019111226A1 décrit un protocole de charge impulsionnelle piloté en régulation de tension non linéaire visant à diminuer le temps de charge, où la tension de charge est pilotée en maintenant constant le produit, de la dérivée par rapport au temps, de l'intensité par celle de la tension. On notera que la recharge est finalisée lorsque la tension de la cellule atteint une valeur maximale.

Un objectif de l'invention est de palier les problèmes précités. L'invention vise à proposer un protocole de charge rapide d'une cellule rechargeable permettant d'augmenter la tension de charge tout en évitant un phénomène d'échauffement thermique indésirable pouvant limiter le courant de charge. L'invention vise à éviter les situations de limitations du courant de charge induites par une montée en température excessive.

Plus précisément, l'invention concerne un procédé de charge d'une cellule électrochimique de batterie rechargeable à commande d'impulsions de charge, les impulsions étant pilotées en régulation de tension sous la forme de paliers de tension d'amplitude variable. Plus précisément, le procédé est remarquable en ce qu'il consiste à calculer la valeur de chaque palier de tension par rapport à la valeur du palier de tension précédent et en fonction d'une variable de progression représentative de la variation de la résistance interne de la cellule, durant une période finalisant au palier précédent, par rapport à un seuil de variation toléré prédéterminé, où ladite variable Var est égale à :

[Math 1]

$$Var = \left(\frac{dR}{dt}\right) - \alpha$$

Où : Var est la variable de progression, d(R)/dt est la variation de la résistance interne de la cellule, et $\alpha$ le seuil de variation toléré prédéterminé.

Selon une variante, lorsque la variable de progression est positive, la valeur du palier est diminuée par rapport au palier précédent et lorsque la variable de progression est négative, la valeur du palier est augmentée par rapport au palier précédent.

Selon une variante, la valeur de chaque palier de tension est égale à la relation de progression suivante :

[Math 2]

$$Ut + 1 = Ut(1 - \frac{\left(\left(\frac{dR}{dt}\right) - \alpha\right) * \beta}{Rt})$$

Où, Ut+1 est la valeur du palier calculée, Ut est la valeur du palier précédent, $\beta$ est un paramètre prédéterminé et Rt la valeur de la résistance interne calculée au palier précédent.

Selon une variante, chaque impulsion est formée d'une pluralité n de paliers de tension, où n est un coefficient entier.

Selon une variante, les impulsions ont une durée prédéterminée fixe.

Selon une variante, le procédé comporte une étape d'estimation en continu de la variation d'une puissance thermique générée par la cellule à partir du déclenchement de chaque d'impulsion, et chaque impulsion a une durée dépendante de ladite variation de puissance thermique par rapport à un seuil prédéterminé.

Selon une variante, le procédé comporte la commande d'une phase de relaxation de la cellule entre chaque impulsion.

Selon une variante, la variation de la résistance interne pour chaque palier de tension d'une impulsion est calculée à partir de la variation de potentiel entre la valeur de la tension du palier précédent et l'estimation d'une tension à vide lors de la phase de relaxation précédant ladite impulsion.

Selon une variante, les phases de relaxation ont une durée d'environ deux secondes et les paliers de tension ont une durée d'une seconde environ, et le coefficient n de pluralités de palier pour une impulsion est constant pour chaque impulsion et est égal à 6.

Selon une variante, le procédé comporte une première phase de charge durant laquelle le premier palier est piloté à une valeur initiale de charge Ut0 calculée selon la relation suivante :

[Math 3] :

$$Ut0 = Uocv + K,$$

Où, Uocv est la tension à vide de la cellule à l'instant t0 de déclenchement de la charge et K est une valeur d'initialisation prédéterminée K.

Selon une variante, le procédé comporte la commande d'une phase d'inversion de polarité entre chaque impulsion.

Selon une variante, le procédé comporte une étape de mesure en continu de la quantité d'énergie chargée et la charge est terminée lorsque le niveau d'état de charge de la cellule atteint une limite prédéterminée. La quantité d'énergie est déterminable par une méthode de coulométrie.

L'invention prévoit également un dispositif de charge d'une cellule électrochimique de batterie rechargeable à commande d'impulsions de charge, les impulsions étant pilotées en régulation de tension sous la forme de paliers de tension d'amplitude variable, comportant un moyen de calcul de la valeur de chaque palier de tension, dans lequel ladite valeur est calculée par rapport à la valeur du palier de tension précédent et en fonction d'une variable de progression représentative de la variation de la résistance interne de la cellule, durant une période finalisant au palier précédent, par rapport à un seuil de variation toléré prédéterminé, où ladite variable Var est égale à :

[Math 4]

$$Var = \left(\frac{dR}{dt}\right) - \alpha$$

Où, Var est la variable de progression, d(R)/dt est la variation de la résistance interne de la cellule, et $\alpha$ le seuil de variation toléré prédéterminé, et le dispositif de charge étant configuré pour mettre en oeuvre le procédé selon l'un quelconque des modes de réalisation précédents.

L'invention prévoit également un produit programme ordinateur comprenant des instructions qui, lorsque le programme est exécuté par une unité de commande du dispositif de charge, conduisent celui-ci à mettre en oeuvre l'un quelconque des modes de réalisation du procédé de charge à commande d'impulsions de charge conformément à l'un quelconque des modes de réalisation précédents.

L'invention présente les avantages suivants :

- La réduction du vieillissement des cellules durant la charge du fait d'un contrôle thermique amélioré.

- La diminution des puissances thermiques à extraire de la batterie en phase de charge, ce qui a pour conséquence de réduire les capacités frigorifiques du système de régulation thermique des systèmes de batterie et ainsi que leur coût et consommation énergétique. Ceci présente un avantage particulier pour les systèmes embarqués.

- L'amélioration de la gestion thermique permet par conséquent une réduction du coût des systèmes alimentés électriquement par une batterie de cellules (véhicules automobiles, dispositifs portables par exemple).

- La durée de charge d'une batterie est optimisée sur l'intégralité du plan de charge d'une batterie (de 0% à 100%). Avec un protocole CC-CV, la vitesse de recharge est dégradée au-delà d'un certain seuil en général entre 50 % et 80% du niveau d'état de charge de la cellule/batterie.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :

[Fig.1] représente un protocole de charge CC-CV selon l'état de la technique déjà décrit dans le préambule de la description.

[Fig.2] est un organigramme représentant un premier algorithme du procédé de charge d'une cellule électrochimique à commande d'impulsions selon l'invention

[Fig.3] représente schématiquement une séquence de pilotage du signal de tension de charge et du courant de charge d'une cellule électrochimique conformément au premier algorithme du procédé de charge selon l'invention.

[Fig.4] est un graphique représentant une charge complète d'une cellule de batterie lors de l'exécution du procédé de charge conformément au premier algorithme.

[Fig.5] est un organigramme représentant un deuxième algorithme du procédé de charge d'une cellule électrochimique à commande d'impulsions selon l'invention.

[Fig.6a] représente une première variante de forme d'impulsion du protocole de charge selon l'invention pouvant être mise en oeuvre par le premier algorithme.

[Fig.6b] représente une deuxième variante de forme d'impulsion du protocole de charge selon l'invention où la durée d'un palier est supérieure à la durée d'impulsion.

[Fig.6c] représente une troisième variante de forme d'impulsion du protocole de charge où les phases de relaxation sont remplacées par des inversions de polarités.

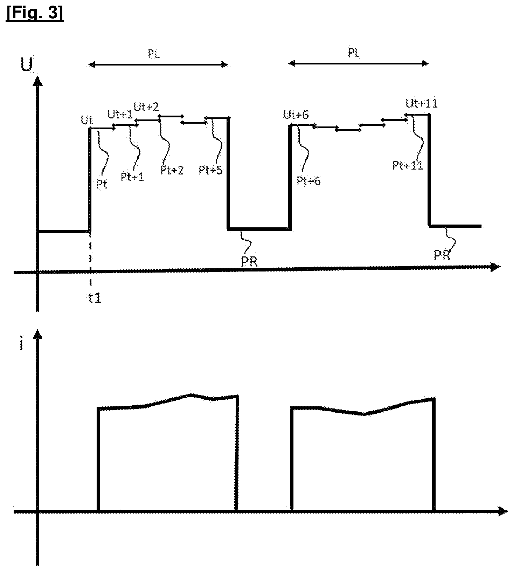

L'invention concerne la charge de cellules électrochimiques, plus précisément les protocoles de charge rapide à commande d'impulsions de charge. L'invention s'applique à une cellule électrochimique unitaire et aux systèmes de batterie comprenant une pluralité de cellules électrochimiques adressables unitairement ou par sous-modules. Le protocole de charge concerne les systèmes de batterie de véhicules automobiles électriques ou véhicules automobiles hybrides munis d'une interface de charge à partir d'une source d'énergie extérieure au véhicule. L'invention s'applique aux systèmes embarqués en électromobilité mais aussi aux systèmes de stockage d'énergie stationnaires.
L'invention s'applique aux cellules électrochimiques de stockage d'énergie, par exemple de type Lithium-Ion, de type Lithium polymère, Lithium fer phosphate, Nickel Cadmium ou bien encore Nickel-Métal-Hydrure.
L'invention prévoit en outre un dispositif de charge d'une cellule ou d'une batterie électrique comprenant une pluralité de cellules, ou bien encore un véhicule automobile équipé d'un tel dispositif de charge, comportant des moyens de recharge électrique de la cellule ou de la batterie à partir d'une source d'énergie extérieure. Le dispositif de charge est configuré pour mettre en oeuvre le procédé de charge selon l'un quelconque des modes de réalisation décrits dans la suite de la description.
Dans le cas d'un véhicule automobile à batterie rechargeable, le dispositif de charge peut être embarqué dans le véhicule ou être une borne de recharge extérieure au véhicule.
Plus précisément, le dispositif de charge est muni d'un calculateur à circuits intégrés et de mémoires électroniques, le calculateur et les mémoires étant configurés pour exécuter le procédé de charge selon l'invention. Mais cela n'est pas obligatoire. En effet, le calculateur pourrait être externe au dispositif de charge, tout en étant couplé à ce dernier. Dans ce dernier cas, il peut être lui-même agencé sous la forme d'un calculateur dédié comprenant un éventuel programme dédié, par exemple. Par conséquent, le dispositif de charge, selon l'invention, peut être réalisé sous la forme de modules logiciels (ou informatiques (ou encore « software »)), ou bien de circuits électroniques (ou « hardware »), ou encore d'une combinaison de circuits électroniques et de modules logiciels.

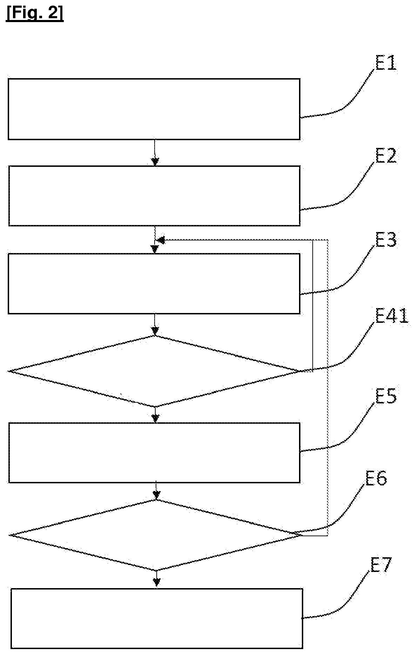

La figure 2 représente un organigramme illustrant un premier algorithme d'exécution du procédé de charge à commande d'impulsion de charge selon l'invention. Dans cet algorithme, la durée des impulsions de charge est fixe et constante pour toutes les impulsions. Chaque impulsion est formée de plusieurs paliers de tension d'amplitude variable conformément à l'invention. Les impulsions de charge s'alternent avec des phases de relaxation, de durée constante prédéterminée, éventuellement. Dans cet exemple, la durée d'une impulsion est d'environ six secondes, et la durée d'un palier de tension, pouvant être défini également par les termes « pas de tension » ou « pas de calcul » de l'amplitude de tension, est d'environ une seconde. La durée de la phase de relaxation est d'environ deux secondes.
Les valeurs des durées mentionnées ci-avant sont données à titre d'exemple et peuvent varier. De plus, ces valeurs peuvent avoir une précision de l'ordre quelques millisecondes, voire dizaine de millisecondes lors de l'exécution du protocole de charge selon l'invention sans affecter la portée de l'invention.
On entend par phase de relaxation, une phase durant laquelle la cellule n'est pas traversée par un courant de charge ou de décharge. La tension de la cellule se stabilise alors à une valeur de tension à vide après une certaine durée de relaxation, couramment désignée par le terme tension OCV selon l'acronyme anglophone pour « Open Circuit Voltage », tension à vide ou tension à l'abandon.
On fait maintenant référence aux figures 2 et 3 parallèlement pour décrire le premier algorithme. Le procédé est configuré pour piloter des paliers de tension définissant un pas de calcul temporellement, où la valeur de tension est calculée (mise à jour) à chaque palier/pas.
A une première phase initiale, le procédé comporte une étape E1 de mesure de la tension à vide Uocv de la cellule à un instant t0 avant le déclenchement de la charge électrique. A cet instant 10, la cellule ou batterie, n'est traversée par aucun courant. La valeur Uocv a pour fonction d'initialiser la valeur du ou des premiers paliers.
A une deuxième phase, à partir de l'instant t0, le procédé comporte une deuxième étape E2 de commande d'une tension Ut0 selon la relation suivante :

[Math 5]

$$Ut0 = Uocv + K,$$

Où, Uocv est la tension à vide à l'instant t0 et K est une valeur d'initialisation prédéterminée et enregistrée en mémoire du calculateur exprimée en Volt. K est par exemple égal à 0,4V ou 0,5V ou une valeur comprise entre 0,4V et 0,5V. La valeur Ut0 est indépendante du niveau initial d'état de charge de la cellule et est donc appliquée quel que soit l'état de charge de la cellule.

Plus la valeur de K est élevée, plus on augmente la vitesse de charge de la cellule. La valeur d'initialisation de la charge K est paramétrée en fonction de la durée de charge recherchée et le vieillissement accepté.

Durant l'étape E2, le procédé pilote alternativement des impulsions en régulation de tension à partir de paliers de tension à la valeur Ut0 et des phases de relaxation de la cellule. Les paliers de tension ont une durée d'une seconde environ et les impulsions une durée d'environ six secondes. Les phases de relaxation ont une durée de deux secondes par exemple. L'étape E2 est pilotée durant une durée prédéterminée (temporisation), très inférieure à la durée de la charge complète de la cellule, par exemple quelques dizaines de secondes, voire quelques centaines de secondes. Cette phase a pour objet l'initialisation du procédé de charge et des paramètres utilisés pour le calcul des amplitudes variables des paliers de tension dans la phase suivante, notamment la valeur de la résistance interne de la cellule.

Plus précisément, pour chaque palier, le procédé exécute une étape de calcul de la résistance interne de la cellule. La résistance interne est calculée en mesurant la différence entre la tension de chaque palier et une valeur de tension à vide Uocv, et en divisant cette différence par la valeur du courant traversant la cellule durant chaque palier. La valeur de tension à vide est la valeur mesurée lors de la dernière phase de relaxation avant ledit palier, ou la première valeur Uocv à l'instant t0.

Aux fins d'exécution du procédé, le dispositif de charge comporte à cet effet des moyens de mesure (capteurs) à chaque instant de la température de la cellule, de courant, de tension lors du pilotage d'une tension, ainsi que des moyens d'estimation de la tension à vide actualisée à chaque phase de relaxation, soit par mesure ou par modèle de calcul. Un calculateur et des mémoires sont prévus pour mémoriser et actualiser les valeurs à chaque instant.

En variante, l'étape E2 est éventuellement une phase de charge à tension constante ou à courant constant qui n'est pas de type impulsionnel. Dans cette variante, l'étape E2 comporte néanmoins de préférence au moins une phase de relaxation permettant la détermination d'une valeur actualisée de tension à vide de la cellule pour le calcul de la résistance interne nécessaire à la détermination du premier palier à amplitude variable.

Une fois l'initialisation terminée (par exemple après la temporisation), le procédé pilote la charge par commande d'impulsion en régulation de tension où chaque palier est déterminé à partir de la valeur en tension du palier précédent et d'une variable de progression conformément à l'invention.

Plus précisément, à une étape E3, illustrée par les graphiques de la figure 3, à partir d'un instant désigné par la référence t1, le procédé comporte pour chaque palier de tension (Pt, Pt+1, Pt+2, ..., Pt+6, ..., Pt+1 1) une étape de mesure des valeurs de la tension (Ut, Ut+1, Ut+2, ..., Ut+6,..., Ut+11) pilotées aux bornes de la cellule sous un courant de charge I, représenté par le graphique inférieur, de mesure de la résistance interne de la cellule Rt et de calcul de la variation de la résistance interne d(R)/dt. Ces mesures sont exploitées pour calculer la valeur d'amplitude en tension du palier suivant. Ces mesures et calculs se réalisent à chaque passage de palier.

Comme on le constate sur la figure 3, deux paliers successifs se suivent immédiatement lors de la commande d'une impulsion, par exemple Pt et Pt+1, ou peuvent voir une phase de relaxation PR s'intercaler entre eux, par exemple Pt+5 et Pt+6. Identiquement à l'étape E2, pour chaque palier Pt la résistance interne Rt est calculée en mesurant la différence de potentiel entre la tension dudit palier Pt et une valeur de tension à vide Uocv, et en divisant cette différence par la valeur du courant traversant la cellule durant ledit palier Pt.

Conformément à l'invention, le procédé consiste à calculer la valeur de chaque palier de tension Ut+1 par rapport à la valeur du palier de tension précédent Ut respectif et en fonction d'une variable de progression Var, où Var est représentative de la variation temporelle de la résistance interne d(R)/dt durant une période finalisant au palier précédent, de préférence la période entre les deux paliers successifs, et un seuil de variation toléré prédéterminé $\alpha$.

La variation temporelle de la résistance interne d(R)/dt est obtenue par un calcul de dérivation temporelle de la valeur de résistance interne entre les deux paliers successifs.

La variable de progression Var est égale à la relation suivante :

[Math 6]

$$Var = \left(\frac{dR}{dt}\right) - \alpha$$

La variation tolérée $\alpha$ est un facteur prédéterminé enregistré en mémoire du calculateur du dispositif de charge et définit une augmentation tolérée de la résistance interne, soit une augmentation de la température tolérée pour la cellule.

La variable de progression Var a pour fonction de moduler le courant de charge par un pilotage en régulation de tension de la manière suivante :

- Lorsque la variable de progression Var est positive, c'est-à-dire que d(R)/dt est supérieur à α, la valeur du palier Ut+1 est diminuée par rapport au palier Ut,

- Lorsque la variable de progression Var est négative, c'est-à-dire que d(R)/dt est inférieur à α, la valeur du palier Ut+1 est augmentée par rapport au palier Ut.

La régulation de la tension en fonction d'un calcul de la variation de la résistance interne a pour effet d'améliorer la réactivité de la boucle de contrôle de la tension de charge et permet de réduire la durée d'un pas de calcul du palier de tension, au regard d'une solution de contrôle par surveillance de la température ou une solution de surveillance d'un seuil de tension. Dans ces deux cas, les boucles de régulations de tension et courant amènent la batterie dans une situation critiques provoquant des mesures préventives de limitations de courant.

Comme la résistance interne d'une cellule est dépendante de la température de la cellule, en pilotant la valeur des paliers de tension en fonction de la dérivée de la résistance interne, on régule les tensions de charge tout en assurant un contrôle thermique efficace en continu, notamment pour les montées subites en température. En cas de montée brusque en température de la cellule, le procédé commande automatiquement une réduction de la tension de charge. Cela présente l'avantage de ne pas entrer dans une situation de saturation thermique et de limitation de courant.

Comme cela est visible en figure 3, le procédé de charge alterne une impulsion en régulation de tension et une phase de relaxation PR. Chaque impulsion est formée de six paliers où la valeur de chaque palier est recalculée en fonction de la variable de progression Var. Sur le graphique inférieur, le courant de charge I traversant la cellule et imposé par les paliers de tension est représenté.

Ce mode de pilotage en régulation de tension à partir de la valeur de progression Var permet de contrôler finement le courant de charge en fonction d'un critère de variation de la température toléré. Cela permet de réduire l'augmentation de température de la cellule en charge et donc le vieillissement. En outre, ce mode de régulation en tension, associé à un protocole en impulsions de tension, autorise un pilotage de tension à une valeur qui est supérieure à la limite maximale de tension généralement préconisée par le fabricant de la cellule en protocole CC-CV. En effet, il est possible d'atteindre des impulsions de 4,8Volts, supérieures à la limite de 4,2 Volts pour une cellule Lithium-ion sans produire des dépôts de Lithium sur les électrodes. Ces niveaux de tension permettent d'augmenter le courant de charge, et donc la vitesse de charge tout en ayant un contrôle de température efficace de la cellule.

Préférentiellement, la valeur de chaque palier de tension Ut+1 est calculée en fonction du palier précédent Ut et de la variable de progression Var, selon la relation de progression suivante :

[Math 7]

$$Ut+1 = Ut\left(1 - \frac{\left(\left(\frac{dR}{dt}\right) - \alpha\right) * \beta}{Rt}\right)$$

Où, α est le seuil de variation toléré prédéterminé, β est un paramètre prédéterminé et Rt la valeur de la résistance interne calculée au palier précédent Pt.

Dans cette formule, β est le facteur qui permet de moduler l'action de la variable de progression Var, et est déterminé expérimentalement et égal par exemple à 0,1s.

Le seuil de variation α est une caractéristique intrinsèque au type de cellule et peut être établie à partir de données fournisseur, en prenant en compte la tension à vide pour un état de charge initial à t0 de 0% par exemple et la tension aux bornes de la cellule de capacité nominale en charge avec un état de charge finale de 100%. La valeur α est déterminable à partir de la formule précédente (Math 7) que l'on considère comme une suite géométrique et en faisant le postulat de négliger la variation de la résistance interne, soit en considérant que d(R)/dt=0.

On en déduit donc la relation suivante pour le calcul d'α :

[Math 8]

$$Ut+1 = Ut\left(1 + \frac{(\alpha) * \beta}{R}\right)$$

Et donc :

[Math 9]

$$\alpha = \frac{R}{\beta}\left(\sqrt[t_{final}]{\frac{U_{t_{final}}}{U_{t_0}}} - 1\right)$$

A titre d'exemple, expérimentalement, une valeur de $\alpha$ a été trouvée égale à 72,3 $\mu$Ohm.s-1 pour une cellule intégrant une cathode NMC. Le régime de charge dépend de $\alpha$ au travers du temps de charge tfinal : plus ce dernier est court, plus $\alpha$ est grand. Pour déterminer la valeur de R, une moyenne entre la résistance à faible niveau de charge (autour de 20%) et la résistance à fort niveau de charge (proche de 80%) est réalisée pour le type de cellule et correspond à une caractéristique intrinsèque de la cellule. Une fois ces deux résistances trouvées, $\alpha$ est calculé, à partir d'un état neuf d'une cellule, pour un format de cellule et une composition électrochimique, et est configuré en mémoire du calculateur du dispositif de charge pour l'exécution du procédé de charge.

Ensuite, à une étape E41, le procédé comporte une étape de vérification de la durée de l'impulsion. Si la durée est supérieure à un seuil prédéterminé, ici par exemple 5 secondes, le procédé pilote une phase de relaxation à une étape E5. Dans le cas contraire, si la durée d'impulsion est inférieure au seuil, alors le procédé retourne à l'étape E3 pour piloter un autre palier de tension faisant partie de la même impulsion.

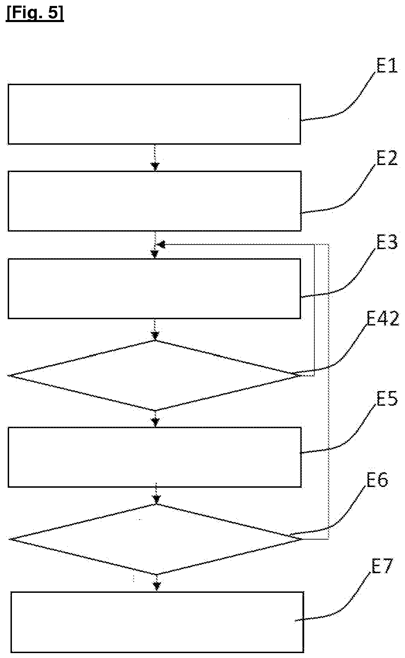

La vérification E41 de la durée de l'impulsion peut être exécutée alternativement en contrôlant le nombre de palier de tension piloté lors de l'étape E3. Par exemple, si on détecte que le nombre de palier formant une impulsion est supérieur à un nombre entier prédéterminé, par exemple 5, le procédé pilote une phase de relaxation. Dans le premier mode de réalisation, la durée d'une impulsion est fixe pour toutes les impulsions. Une autre alternative à l'étape 41, correspondant au deuxième mode de réalisation, sera décrite en figure 5.

A l'étape E5, le procédé pilote la phase de relaxation PR, par exemple d'une durée de deux secondes.

Ensuite, le procédé comporte une étape de vérification E6 de la quantité d'énergie chargée dans la cellule lors du protocole de charge. A l'étape E6, on calcule par méthode coulométrique, c'est-à-dire par la mesure du courant effectuée par capteur depuis l'instant de début de charge à t0, et un calcul d'intégrale du courant, la quantité d'énergie chargée et on compare la quantité chargée avec une limite de charge maximum, par exemple la capacité nominale de la cellule Qnom, ou une limite de charge maximale prédéterminée dans le cas d'une batterie.

Lorsque la capacité chargée atteint la limite maximale, à une étape finale E7, le procédé de charge exécute la commande d'arrêt de la charge de la cellule/batterie.

Dans le cas contraire, le procédé pilote à nouveau une impulsion de charge en régulation de tension conformément à l'étape E3. Le protocole de charge impulsionnel, alternant impulsions de charge en régulation de tension et phase de relaxation jusqu'à ce que la capacité chargée soit égale à la limite maximale.

Dans le cas de la figure 3, on notera qu'une impulsion est formée d'une pluralité n de paliers de tension, où n est un coefficient entier, ici n=6. Le fait d'avoir plusieurs paliers n lors du pilotage d'une impulsion améliore la réactivité du protocole de charge par rapport à la variation de la résistance interne. Le dispositif de charge présente un meilleur contrôle de température par rapport à un système où l'amplitude en tension d'une impulsion est constante.

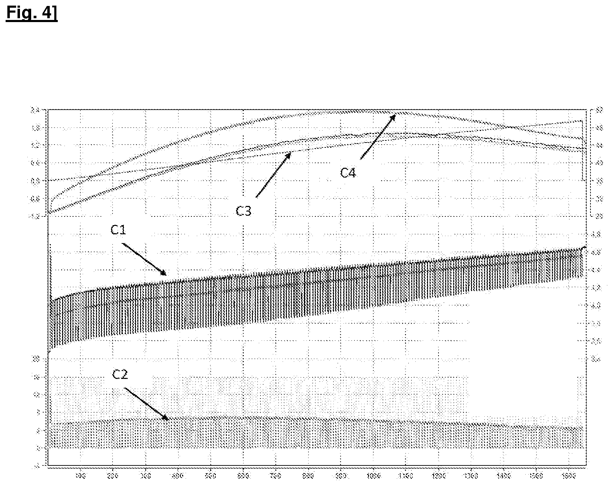

La figure 4 illustre une charge complète d'une cellule (0%->100%) lors de l'application du premier algorithme du procédé de charge impulsionnel selon l'invention. Les impulsions de tension sont représentées par la courbe C1, le courant résultant est représenté par la courbe inférieure C2, l'évolution de l'état de charge de 0 à 100% est représenté par la droite C3 et la température de la cellule est représentée par la courbe C4.

On observe que la tension augmente en fin de charge jusqu'à 4.7 Volts et se relaxe aux environs de 4.2 Volts (tension à vide avec un état de charge de 100%). La charge de la cellule s'effectue en 1700 secondes et entraine une élévation de température maximale de 20°C. Le critère de fin de charge correspond à l'atteinte de la capacité maximale de la batterie, estimé par méthode coulométrique.

Enfin, aux fins d'exécution du procédé de charge, le dispositif de charge de la cellule comporte des moyens de mesure des paramètres électriques de la cellule (tension, courant notamment), ainsi que des moyens de calcul spécifiquement configurés pour calculer en continu des valeurs de résistance interne de la cellule, des valeurs de variation de la résistance interne entre chaque palier de tension, des valeurs de paliers en fonction du palier précédent et de la variation de résistance interne, des moyens de commande des impulsions de charge sous la forme de paliers de tension pilotés en régulation de tension conformément au procédé selon l'invention alternativement avec des phases de relaxation, ou d'inversion de polarité éventuellement.

La figure 5 représente un organigramme illustrant le deuxième algorithme d'exécution du procédé de charge à commande d'impulsion selon l'invention. Dans cet algorithme, la durée des impulsions de charge est dépendante de la variation de puissance thermique générée par la cellule à partir de l'instant de début de l'impulsion. A l'instar du premier algorithme, décrit en figure 2, chaque impulsion est formée de plusieurs paliers de tension d'amplitude variable calculée en fonction du palier précédent et de la variable de progression calculée en fonction de la variation de la résistance interne. Les impulsions de charge s'alternent avec des phases de relaxation, de durée constante prédéterminée, éventuellement.

Le deuxième algorithme diffère du premier algorithme du fait qu'une impulsion est générée, c'est-à-dire sans intercaler une phase de relaxation, tant que la variation thermique ne dépasse pas un seuil prédéterminé de puissance thermique. Identiquement au premier algorithme, la durée d'un palier de tension est d'environ une seconde et la durée de la phase de relaxation est d'environ deux secondes. Les étapes E1, E2, E3, E5, E6, E7 sont donc identiques aux étapes du premier algorithme de la figure 2.

Ainsi, l'étape E42 consiste à vérifier que la puissance thermique générée par la cellule depuis le début de pilotage d'une impulsion reste inférieure à un seuil prédéterminé. A l'étape 42, le procédé comporte donc une étape d'estimation en continu de la variation d'une puissance thermique générée par la cellule à partir du déclenchement de chaque d'impulsion, et chaque impulsion a une durée dépendante de ladite variation de puissance thermique par rapport audit seuil prédéterminé. Lorsque la puissance thermique atteint le seuil, le procédé commande une phase de relaxation à l'étape E5. Par exemple, le seuil de variation de puissance a une valeur de 0,02W.

La puissance thermique est calculée en multipliant l'intensité qui traverse la cellule par la différence de tension entre la tension en charge et la tension à vide, lors de la phase de relaxation précédent l'impulsion. Il est envisageable de contrôler la puissance thermique par la mesure d'un capteur. Cependant, la mesure de la température peut présenter un temps de latence qui n'est pas optimal pour le pilotage des impulsions.

La durée des impulsions est donc variable pour le deuxième algorithme. Ce mode de déclenchement d'une phase de relaxation a pour avantage d'améliorer le contrôle thermique de la cellule lors d'une charge, notamment pour éviter les effets de dépôts de lithium. Il permet en outre de poursuivre l'application d'une tension de charge, tant que les conditions thermiques surveillées le permettent. De plus, en complément du calcul de la tension de chaque palier, qui peut croitre également si les conditions thermiques le permettent, le procédé augmente significativement la vitesse de charge d'une cellule/batterie. Tout comme pour le premier algorithme, le pilotage des tensions de chaque palier (en fonction du palier précédent et de la variation de la résistance interne) et le protocole impulsionnel permet d'augmenter la tension de charge au-delà de la tension limite préconisée par le fabricant.

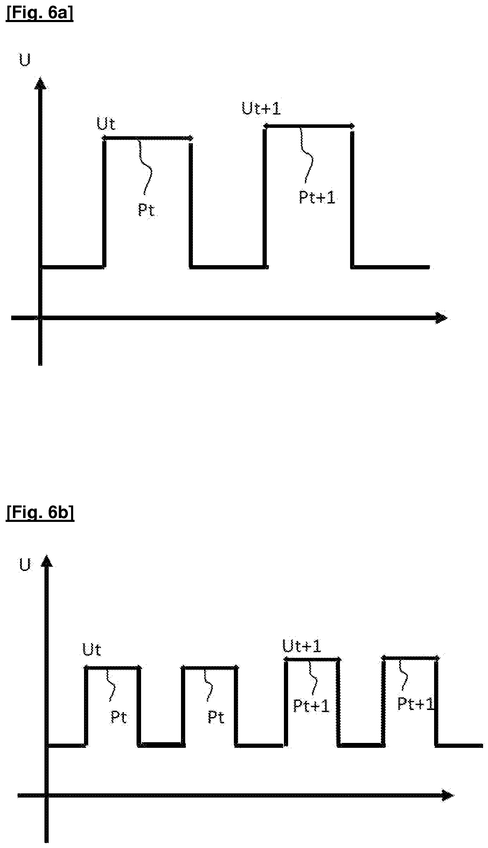

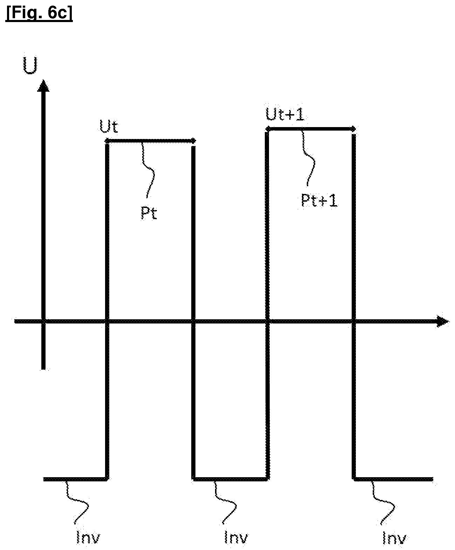

Les figures 6a, 6b et 6c représentent des variantes des formes d'impulsion en régulation de tension pouvant être pilotées par le procédé. En figure 6a, on voit que les paliers Pt, Pt+1, de tension variable Ut, Ut+1 conformément au procédé selon l'invention peuvent être d'une durée égale à une impulsion. Cette forme d'impulsion est pilotable au moyen du premier algorithme.

Il est également envisageable que la durée d'un palier soit supérieure à la durée d'une impulsion. Par exemple que cela est représenté en figure 6b, le calcul des tensions est exécuté selon un pas qui est égal à un multiple de la durée d'une impulsion et d'une relaxation. Cette forme d'impulsion est pilotable au moyen du premier algorithme.

Comme cela est illustré par la figure 6c, on envisage que la phase de relaxation puisse être remplacée par une phase d'inversion de polarité inv. Une méthode alternative d'estimation de la tension à vide de la cellule serait mise en place à partir des paramètres mesurables instantanés de la cellule (par exemple état de charge) et de modèles d'estimation préétablis de la cellule pour le calcul de la variable de progression. Cette forme d'impulsion est pilotable au moyen du premier algorithme et deuxième algorithme.

**Revendications**

1. Procédé de charge d'une cellule électrochimique de batterie rechargeable à commande d'impulsions de charge (PL), les impulsions (PL) étant pilotées en régulation de tension sous la forme de paliers de tension (Pt) d'amplitude variable, **caractérisé en ce qu'**il consiste à calculer la valeur (Ut+1) de chaque palier de tension (Pt+1) par rapport à la valeur (Ut) du palier de tension précédent (Pt) et en fonction d'une variable de progression (Var) représentative de la variation de la résistance interne de la cellule (d(R)/dt), durant une période finalisant au palier précédent (Pt), par rapport à un seuil de variation toléré prédéterminé ($\alpha$), où ladite variable Var est égale à :

$$Var = \left(\frac{dR}{dt}\right) - \alpha$$

Où : Var est la variable de progression, d(R)/dt est la variation de la résistance interne de la cellule, et $\alpha$ le seuil de variation toléré prédéterminé.

**2.** Procédé selon la revendication 1, **caractérisé en ce que** lorsque la variable de progression (Var) est positive, la valeur (Ut+1) du palier (Pt+1) est diminuée par rapport au palier précédent (Pt) et **en ce que** lorsque la variable de progression (Var) est négative, la valeur (Ut+1) du palier (Pt+1) est augmentée par rapport au palier précédent (Pt).

**3.** Procédé selon la revendication 2, **caractérisé en ce que** la valeur de chaque palier de tension (Ut+1) est égale à la relation de progression suivante :

$$Ut + 1 = Ut\left(1 - \frac{\left(\left(\frac{dR}{dt}\right) - \alpha\right) * \beta}{Rt}\right)$$

Où, Ut+1 est la valeur du palier calculée, Ut est la valeur du palier précédent, $\beta$ est un paramètre prédéterminé et Rt la valeur de la résistance interne calculée au palier précédent.

**4.** Procédé selon l'une quelconque des revendications 1 à 3, **caractérisé en ce que** chaque impulsion (PL) est formée d'une pluralité n de paliers de tension (Pt), où n est un coefficient entier.

**5.** Procédé selon l'une quelconque des revendications 1 à 4, **caractérisé en ce que** les impulsions (PL) ont une durée prédéterminée fixe.

**6.** Procédé selon l'une quelconque des revendications 1 à 4, **caractérisé en ce qu'**il comporte une étape d'estimation en continu de la variation d'une puissance thermique générée par la cellule à partir du déclenchement de chaque d'impulsion, et **en ce que** chaque impulsion a une durée dépendante de ladite variation de puissance thermique par rapport à un seuil prédéterminé.

**7.** Procédé selon l'une quelconque des revendications 1 à 6, **caractérisé en ce qu'**il comporte la commande d'une phase de relaxation (PR) de la cellule entre chaque impulsion.

**8.** Procédé selon la revendication 7, **caractérisé en ce que** la variation de la résistance interne (d(R)/dt) pour chaque palier de tension (Ut+1) d'une impulsion (PL) est calculée à partir de la variation de potentiel entre la valeur de la tension (Ut) du palier précédent (Pt) et l'estimation d'une tension à vide (Uocv) lors de la phase de relaxation (PR) précédant ladite impulsion.

**9.** Procédé selon l'une quelconque des revendication 1 à 8, **caractérisé en ce qu'**il comporte une première phase de charge durant laquelle le premier palier est piloté à une valeur initiale de charge Ut0 calculée selon la relation suivante :

$$Ut0 = Uocv + K,$$

Où, Uocv est la tension à vide de la cellule à l'instant t0 de déclenchement de la charge et K est une valeur d'initialisation prédéterminée K.

**10.** Dispositif de charge d'une cellule électrochimique de batterie rechargeable à commande d'impulsions de charge (PL), les impulsions étant pilotées en régulation de tension sous la forme de paliers de tension (Pt) d'amplitude variable, **caractérisé en ce qu'**il comporte un moyen de calcul de la valeur (Ut+1) de chaque palier de tension P(T+1), dans lequel ladite valeur (Ut+1) est calculée par rapport à la valeur (Ut) du palier de tension précédent (Pt) et en fonction d'une variable de progression (Var) représentative de la variation de la résistance interne de la cellule, durant une période finalisant au palier précédent (Pt), par rapport à un seuil de variation toléré prédéterminé, où ladite variable Var est égale à :

$$Var = \left(\frac{dR}{dt}\right) - \alpha$$

Où, Var est la variable de progression, d(R)/dt est la variation de la résistance interne de la cellule, et $\alpha$ le seuil de

variation toléré prédéterminé, et **en ce qu'**il est configuré pour mettre en oeuvre le procédé selon l'une quelconque des revendications 1 à 9.

**Patentansprüche**

1. Verfahren zum Laden einer elektrochemischen Akkuzelle mit Ladeimpulssteuerung (PL), wobei die Impulse (PL) spannungsgeregelt in Form von Spannungspegeln (Pt) variabler Amplitude gesteuert werden, **dadurch gekennzeichnet, dass** es darin besteht, den Wert (Ut) zu berechnen +1) jedes Spannungspegels (Pt+1) im Verhältnis zum Wert (Ut) des vorherigen Spannungspegels (Pt) und als Funktion einer Verlaufsvariablen (Var), die die Variation des Innenwiderstands der Zelle darstellt (d(R)/dt) während eines Zeitraums, der auf dem vorherigen Niveau (Pt) endet, relativ zu einem vorbestimmten tolerierten Schwankungsschwellenwert ($\alpha$), wobei die Variable Var gleich ist:

$$Var = \left(\frac{dR}{dt}\right) - \alpha$$

Dabei ist: Var die Progressionsvariable, d(R)/dt die Variation des Innenwiderstands der Zelle und $\alpha$ der vorgegebene tolerierte Variationsschwellenwert.

2. Verfahren nach Anspruch 1, **dadurch gekennzeichnet, dass** bei positiver Progressionsvariable (Var) der Wert (Ut+1) des Niveaus (Pt+1) gegenüber dem vorherigen Niveau (Pt) verringert wird und dass bei positiver Progression Wenn die Variable (Var) negativ ist, wird der Wert (Ut+1) der Ebene (Pt+1) im Vergleich zur vorherigen Ebene (Pt) erhöht.

3. Verfahren nach Anspruch 2, **dadurch gekennzeichnet, dass** der Wert jedes Spannungspegels (Ut+1) der folgenden Verlaufsbeziehung entspricht:

$$Ut + 1 = Ut(1 - \frac{\left(\left(\frac{dR}{dt}\right) - \alpha\right) * \beta}{Rt})$$

Dabei ist Ut+1 der berechnete Pegelwert, Ut der Wert des vorherigen Pegels, $\beta$ ein vorgegebener Parameter und Rt der auf dem vorherigen Pegel berechnete Wert des Innenwiderstands.

4. Verfahren nach einem der Ansprüche 1 bis 3, **dadurch gekennzeichnet, dass** jeder Impuls (PL) aus mehreren n Spannungspegeln (Pt) besteht, wobei n ein ganzzahliger Koeffizient ist.

5. Verfahren nach einem der Ansprüche 1 bis 4, **dadurch gekennzeichnet, dass** die Impulse (PL) eine fest vorgegebene Dauer haben.

6. Verfahren nach einem der Ansprüche 1 bis 4, **dadurch gekennzeichnet, dass** es einen Schritt zur kontinuierlichen Schätzung der Variation einer von der Zelle erzeugten Wärmeleistung ab der Auslösung jedes Impulses umfasst und dass jeder Impuls eine von dieser Variation abhängige Dauer aufweist in der Wärmeleistung relativ zu einem vorgegebenen Schwellenwert.

7. Verfahren nach einem der Ansprüche 1 bis 6, **dadurch gekennzeichnet, dass** es die Steuerung einer Entspannungsphase (PR) der Zelle zwischen jedem Impuls umfasst.

8. Verfahren nach Anspruch 7, **dadurch gekennzeichnet, dass** die Änderung des Innenwiderstands (d(R)/dt) für jeden Spannungspegel (Ut+1) eines Impulses (PL) aus der Potenzialänderung zwischen dem Wert des berechnet wird Spannung (Ut) des vorherigen Niveaus (Pt) und die Schätzung einer Leerlaufspannung (Uocv) während der Entspannungsphase (PR), die dem Impuls vorausgeht.

9. Verfahren nach einem der Ansprüche 1 bis 8, **dadurch gekennzeichnet, dass** es eine erste Lastphase umfasst, während der die erste Stufe auf einen anfänglichen Lastwert Ut0 gesteuert wird, der gemäß der folgenden Beziehung

berechnet wird:

$$Ut0 = Uocv + K,$$

Dabei ist Uocv die Leerlaufspannung der Zelle zum Zeitpunkt t0 der Ladeauslösung und K ein vorgegebener Initialisierungswert K.

**10.** Vorrichtung zum Laden einer elektrochemischen Akkumulatorzelle mit Ladeimpulssteuerung (PL), wobei die Impulse spannungsgeregelt in Form von Spannungspegeln (Pt) variabler Amplitude gesteuert werden, **dadurch gekennzeichnet, dass** sie Mittel zur Berechnung des Wertes (Ut+1) umfasst) jedes Spannungspegels P(T+1), wobei der Wert (Ut+1) in Bezug auf den Wert (Ut) des vorherigen Spannungspegels (Pt) und als Funktion einer Verlaufsvariablen (Var) berechnet wird, repräsentativ für die Variation des Innenwiderstands der Zelle während eines Zeitraums, der auf dem vorherigen Niveau (Pt) endet, relativ zu einem vorbestimmten tolerierten Variationsschwellenwert, wobei die Variable Var gleich ist:

$$Var = \left(\frac{dR}{dt}\right) - \alpha$$

Dabei ist Var die Progressionsvariable, d(R)/dt die Variation des Innenwiderstands der Zelle und $\alpha$ der vorgegebene tolerierte Variationsschwellenwert, und es ist so konfiguriert, dass es das Verfahren nach einem der Ansprüche 1 implementiert bis 9.

**Claims**

**1.** Method for charging an electrochemical rechargeable battery cell with charge pulse control (PL), the pulses (PL) being controlled in voltage regulation in the form of voltage levels (Pt) of variable amplitude, **characterized in** what it consists of calculating the value (Ut+1) of each voltage level (Pt+1) in relation to the value (Ut) of the previous voltage level (Pt) and as a function of a progression variable ( Var) representative of the variation in the internal resistance of the cell (d(R)/dt), during a period finalizing at the previous level (Pt), relative to a predetermined tolerated variation threshold ($\alpha$), where said variable Var Equals :

$$Var = \left(\frac{dR}{dt}\right) - \alpha$$

Where: Var is the progression variable, d(R)/dt is the variation in the internal resistance of the cell, and $\alpha$ the predetermined tolerated variation threshold.

**2.** Method according to claim 1, **characterized in that** when the progression variable (Var) is positive, the value (Ut+1) of the level (Pt+1) is reduced compared to the previous level (Pt) and **in that** when the progression variable (Var) is negative, the value (Ut+1) of the level (Pt+1) is increased compared to the previous level (Pt).

**3.** Method according to claim 2, **characterized in that** the value of each voltage level (Ut+1) is equal to the following progression relationship:

$$Ut + 1 = Ut(1 - \frac{\left(\left(\frac{dR}{dt}\right) - \alpha\right) * \beta}{Rt})$$

Where, Ut+1 is the calculated level value, Ut is the value of the previous level, $\beta$ is a predetermined parameter and Rt the value of the internal resistance calculated at the previous level.

**4.** Method according to any one of claims 1 to 3, **characterized in that** each pulse (PL) is formed of a plurality n of voltage levels (Pt), where n is an integer coefficient

5. Method according to any one of claims 1 to 4, **characterized in that** the pulses (PL) have a fixed predetermined duration.

6. Method according to any one of claims 1 to 4, **characterized in that** it comprises a step of continuously estimating the variation of a thermal power generated by the cell from the triggering of each pulse, and **in that** each pulse has a duration dependent on said variation in thermal power relative to a predetermined threshold.

7. Method according to any one of claims 1 to 6, **characterized in that** it comprises the control of a relaxation phase (PR) of the cell between each pulse.

8. Method according to claim 7, **characterized in that** the variation of the internal resistance (d(R)/dt) for each voltage level (Ut+1) of a pulse (PL) is calculated from the variation in potential between the value of the voltage (Ut) of the previous level (Pt) and the estimate of a no-load voltage (Uocv) during the relaxation phase (PR) preceding said pulse.

9. Method according to any one of claims 1 to 8, **characterized in that** it comprises a first load phase during which the first stage is controlled at an initial load value Ut0 calculated according to the following relationship:

$$Ut0 = Uocv + K,$$

Where, Uocv is the no-load voltage of the cell at time t0 of charge triggering and K is a predetermined initialization value K.

10. Device for charging an electrochemical rechargeable battery cell with charge pulse control (PL), the pulses being controlled in voltage regulation in the form of voltage levels (Pt) of variable amplitude, **characterized in that** it comprises means for calculating the value (Ut+1) of each voltage level P(T+1), in which said value (Ut+1) is calculated in relation to the value (Ut) of the previous voltage level (Pt) and as a function of a progression variable (Var) representative of the variation in the internal resistance of the cell, during a period finalizing at the previous level (Pt), relative to a predetermined tolerated variation threshold, where said variable Var is equal to:

$$Var = \left(\frac{dR}{dt}\right) - \alpha$$

Where, Var is the progression variable, d(R)/dt is the variation of the internal resistance of the cell, and $\alpha$ the predetermined tolerated variation threshold, and **in that** it is configured to implement the method according to any one of claims 1 to 9.

[Fig. 1]

[Fig. 2]

[Fig. 3]

Fig. 4]

[Fig. 5]

[Fig. 6a]

[Fig. 6b]

[Fig. 6c]

**RÉFÉRENCES CITÉES DANS LA DESCRIPTION**

**Documents brevets cités dans la description**

- US 6707272 B1
- EP 1396061 A2
- US 20150028819 A1
- US 20170005497 A1
- WO 2019111226 A1